Europäisches Patentamt

European Patent Office

Office européen des brevets

(11) Publication number: **0 158 421**
**A1**

# (12) EUROPEAN PATENT APPLICATION

(21) Application number: **85301176.5**

(22) Date of filing: **22.02.85**

(51) Int. Cl.⁴: **E 05 F 15/00**
**E 05 F 15/06**

(30) Priority: **27.02.84 GB 8405039**

(43) Date of publication of application:
**16.10.85 Bulletin 85/42**

(84) Designated Contracting States:
**AT BE CH DE FR IT LI LU NL SE**

(71) Applicant: **WESTINGHOUSE BRAKE AND SIGNAL COMPANY LIMITED**
**Pew Hill**
**Chippenham Wiltshire(GB)**

(72) Inventor: **Wilkins, Michael John**
**9 Gregory Close**
**Sutton Benger Chippenham Wilts(GB)**

(74) Representative: **Bird, Vivian John et al,**
**PAGE & CO. Temple Gate House**
**Temple Gate Bristol, BS1 6PL(GB)**

(54) Door close mechanism.

(57) A control mechanism for the actuator (10) of powered door, e.g and "underground" or metro railway vehicle includes means (17, 20, 21, 23, 25) for interrupting and reversing a door closing operation upon detection of an obstruction. The motion of the door is sensed by a motion detector (18) and when halted a control sequence is initiated which at least partially re-opens the door and automatically recycles the door until the obstruction is cleared. ·

EP 0 158 421 A1

./...

Fig.3

Door close mechanism

The invention relates to door close mechanisms particularly those fitted to passenger carrying vehicles such as metro and underground railway vehicles, and also to platform doors sometimes found at metro and underground railway stations.

An object of the invention is to provide a door close mechanism for use in an automatically controlled doorway system which will safely close all open doors in the fastest possible time. Detection of an obstruction in a doorway is of primary importance to both the safety and speed of operation of the system. It is imperative that signal interlock circuits are used which prevent a train leaving a platform unless all doors on the train and, if used, on the platform have been proved closed and locked. Therefore, it is preferred that the door close system includes some form of obstruction detection.

In a basic, but non-selective, system there is provided merely an indication that all doors are/are not closed and locked. If an obstruction is present all doors are re-opened under manual control of a train driver or guard, and door closure re-attempted. If the obstruction is "passive" (like a briefcase) then it may be necessary for an attendant to physically clear the obstruction. A problem with this type of non-selective system occurs, especially in rush hour conditions, because it provides an opportunity for other obstructions to arise in others of the re-opened doorways which had previously successfully closed.

An obstruction detection system should preferably allow the obstructed doorway only to be cleared whilst preventing the introduction of further obstructions.

It is known to provide at each doorway means for detecting an obstruction which is arranged to modify the door closing cycle of that door only. A variety of schemes have been employed including complete re-opening of a doorway, and ranging to a mere reduction in the closing force sufficient to release an obstruction. A problem arising with such arrangement is that passengers have learned to "defeat" them for example, by deliberately obstructing a door with a briefcase in order to obtain late entry to a train.

According to the present invention there is provided a door close mechanism comprising actuator means energisable to provide motive power for opening and closing the door, motion sensing means responsive to a halt in the closing movement of the door to produce a change in an output which will indicate the presence of an obstruction, and interrupt control means responsive to said change to interrupt energisation of the actuator means to permit clearance of the obstruction.

Preferably the door close mechanism further includes means for enabling the output of the motion sensing means when the door reaches a partially closed position, which position may correspond to an open doorway width approximately equal to the shoulder width of an adult male passenger.

The invention and how it may be carried into practice will now be described, by way of example only, with reference to the accompanying drawings, in which:

Fig 1 shows a circuit diagram of a first interrupt control means,

Fig 2 shows a circuit diagram of a second interrupt control means, and

Fig 3 shows a block diagram of a digital control means.

A typical door system, to which the invention may be applied, comprises a sliding door arrangement in which the motive power is supplied by a spring biased electro-pneumatic linear actuator. The spring bias is towards the door closed position and pneumatic pressure may be admitted to the actuator via electrically operated soleniod valves to open the door. The actuator is essentially a long stroke piston and cylinder arrangement housing a spring at one end acting against the piston in a door closing direction and, at the opposite end of the cylinder, an electro-pneumatic valve for admitting compressed air to the cylinder to move the piston against spring force in a door opening direction. The motive power output of the actuator is taken via a long piston rod, passing through one end of the cylinder, driving an endless belt which passes over pulleys mounted at either side of the doorway headframe and which at its centre is attached to a door carriage.

In this arrangement the motion sensing means comprises an electrical generator driven from one of the belt pulleys. The electrical generator may comprise a D.C. generator but, preferably, is an alternator giving an A.C. output. Generally, but depending upon the mechanical arrangement, the generator drive includes gearing-up of the belt pulley movement to provide sufficient rotational speed for adequate generator output. The output from this motion sensor is used to energise the coil of a relay, for example, and the state of the relay is used to effectively indicate to a circuit controlling operation of the actuator the state of motion of the door.

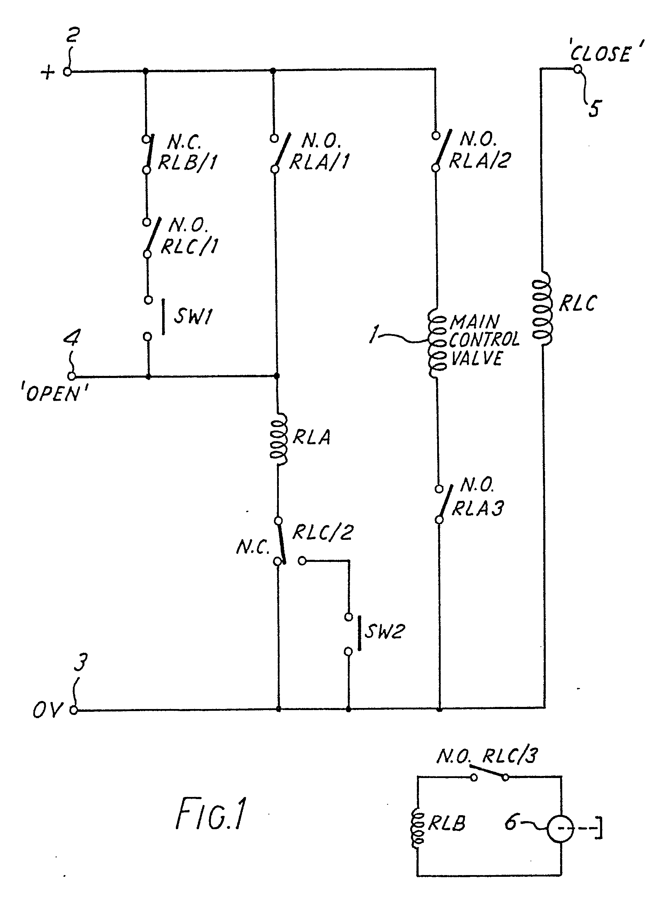

A first example of an actuator control circuit is illustrated in Fig 1, wherein 1 indicates the coil of the solenoid of the operated main control valve of the actuator (not shown), when coil 1 is energised the valve is opened and pressurised air admitted to the actuator cylinder and when de-energised the valve is closed and vented to atmosphere.

The coil 1 is connected in series between two normally open relay contacts RLA/2 and RLA/3. In parallel with this circuit arm is the energising coil of relay RLA which is also connected in series between normally open contacts RLA/1 and a further combination of switchable contacts comprising changeover contacts RLC/2 in which the normally closed contact is connected directly to a 0 volt line and the normally open contact is connected to the 0 volt line through a switch SW2. One terminal of each of the contacts RLA/1 and RLA/2 are connected in common to a power supply terminal 2, marked in the drawing with positive volts, and the 0 volt  line is connected to a power supply terminal 3.

A further series of switch contacts is connected between the positive volt line and the positive side of the coil of relay RLA with the switched contact of RLA/1, this series of switches comprises normally closed contacts RLB/1, normally open contacts RLC/1 and a further switch SW1. The positive side of the coil of relay RLA and one terminal of switch SW1 are also connected to an "open" terminal 4. A further terminal 5 which receives a "close" input signal is connected to one side of a coil of relay RLC the other side of which is connected to the 0 volt line and terminal 3.

The switches SW1 and SW2 comprise micro switches located in the headframe of the doorway so as to be "made" sequentially partway through the movement of a closing door, switch SW2 is made first followed shortly afterwards by SW1 in the direction of a closing door. The position of switch SW2 defines a so-called " arming point" of the obstruction detection mechanism.

The motion sensing means comprises a A.C. generator 6 and the coil of relay RLB is connected to one output of a A.C. generator 6 and through normally open contacts RLC/3 to the opposite terminal of the generator, thus, relay RLB is only energised in the presence of the door close signal and while the door is moving.

In operation, of the arrangement to which Fig 1 refers, to open the door the "close" input terminal 5 is effectively grounded and a positive voltage signal applied to "open" terminal 4 which has the effect of energising the coil of RLA through the current path via normally closed contacts RLC/2, which remain in their normally closed position as long as coil RLC is not energised. Energisation of coil RLA of that relay causes all three pairs of its contacts, i.e. RLA/1, RLA/2 and RLA/3, to be closed. Thus, the relay coil RLA becomes self-sustaining through closed contacts RLA/1, and the main control valve 1 is energised when contacts RLA or and RLA/3 are closed. The energisation of coil 1 of the solenoid valve opens the valve and admits compressed air to the actuator forcing the piston against its spring bias and opening the door.

To close the door, terminal 4 is open circuited, and a positive volts signal is applied to the "close" input at terminal 5. Relay RLC is energised and as a result of contacts RLC/2 changing state the coil of relay RLA is de-energised releasing the control valve which immediately cuts-off pneumatic pressure and vents the actuator cylinder to atmosphere and the door commences to close driven by the stored energy in the actuator bias spring. Simultaneously, the signal on terminal 5 energises the coil of relay of RLC which switches the contacts RLC/2 to their second position bringing switch SW2 into circuit, and closes the normally open contacts RLC/1.

Part way through its travel to the closed position the door contacts and closes firstly the switch SW2 and then, shortly afterwards, switch SW1. The point at which SW2 closes is termed "arming point" of the obstruction detector. When switch SW1 closes it connects one side of coil RLA to positive terminal 2 through closed contacts RLC/1 and RLB/1, thereby making subsequent energisation of coil RLA dependent upon the state of contacts of RLB/1 through switch SW2.

As soon as the door is closing at normal speed, i.e. within an inch or two of commencing movement, the motion sensor 6 generates sufficient output to energise coil RLB and thereby open contacts RLB/1. At the "arming point" of the obstruction detector, preferably when the doorway width is approximately equal to the shoulder width of an adult male passenger, the switch SW2 is mechanically closed so that energisation of relay coil of RLA is solely dependent upon the state of contact of RLB/1 and SW1 as long as the door close signal is maintained.

In the event that the door is obstructed, so as to effectively halt movement of the door, the generator 6 ceases to provide an output releasing relay RLB and the contacts RLB/1 return to the normally closed position and energise relay RLA. The relay acts as previously described automatically closing contacts RLA/1, RLA/2 and RLA/3 sustaining itself and energising coil 1 to open the main control valve to re-admit pneumatic pressure to the actuator cylinder which has the effect of re-opening the door. Switch SW1 re-opens first and interrupts one energisation path in relay coil RL1, when switch SW2 is subsequentially also re-opened the coil RLA is de-energised. This de-energies the control valve solenoid 1 re-venting the cylinder and allowing the door to resume close. Thus, when an obstruction occurs the door is re-cycled as far as the arming point of the obstruction detector. The generator 6 is not directionally sensitive and produces, when the door moves in either open or close directions, an output capable of energising relay RLB is produced.

If the obstruction has been cleared the door will reach the fully closed position, and when a door closed and locked indication has been given the signal on terminal 5 is removed thereby de-activating the control circuit. However, should the obstruction remain the process will be repeated and the door will continue to cycle through the partial closing movement described.

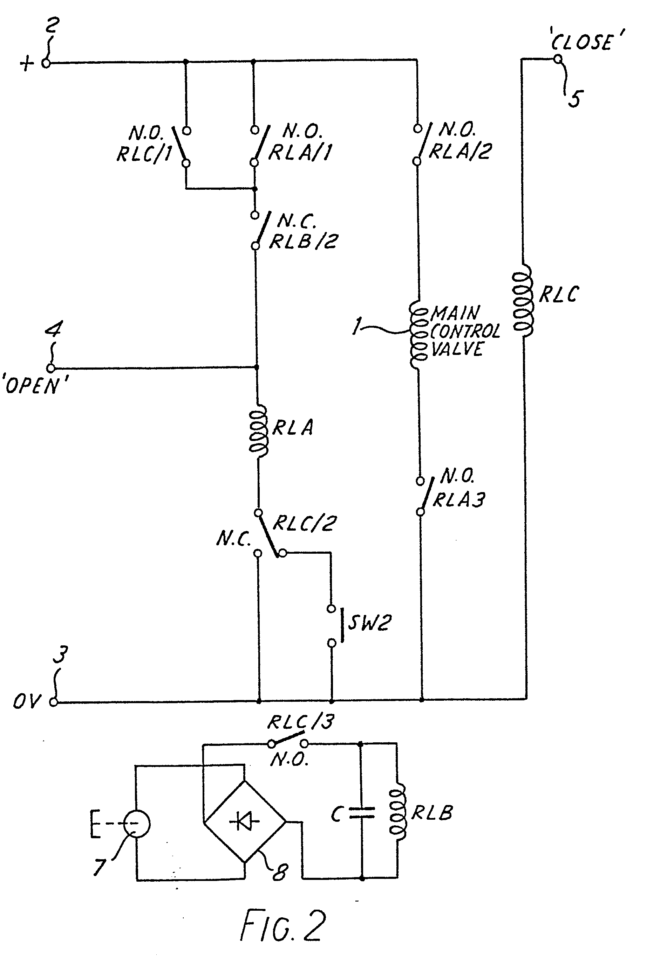

The second embodiment of a control circuit is illustrated in Fig 2, in which like parts are given like references. In this example the motion sensing means comprises a A.C. generator 7 which feeds its output through a bridge rectifier 8 to the energising circit of relay coil RLB and normally open contacts RLC/3. A capacitor C is connected in parallel with relay coil RLB, the value of the capacitance being sufficient to hold the coil temporarily energised whilst the door changes direction.

The energising path for the coil of relay RLA, is via normally closed contacts RLB/2 in series with either the alternative paths through normally open contacts RLC/1 or normally open contacts RLA/1 to the positive supply terminal 2. The contacts RLB/2 are opened by energisation of coil RLB due to an output from generator 7 so that the coil RLA can not be energised as long as the door continues a closing movement. Upon first application of a door close signal to terminal 5 relay RLC is energised and the contacts RLC/1 are closed, then in the event of the door ceasing movement and contacts RLB/2 closing the relay RLA energises and then sustains itself by closing contacts RLA/1.

The contacts RLB/2 are only closed when the door is stationary, for longer than time in which capacitor C discharges sufficiently to allow the coil RLB to de-energise. When the door moves the capacitor C is sufficiently charged within a few inches of travel and the contacts are opened. Thus, when an obstruction is detected the door re-opens only that few inches and will continue to re-cycle in that manner for as long as the obstruction remains.

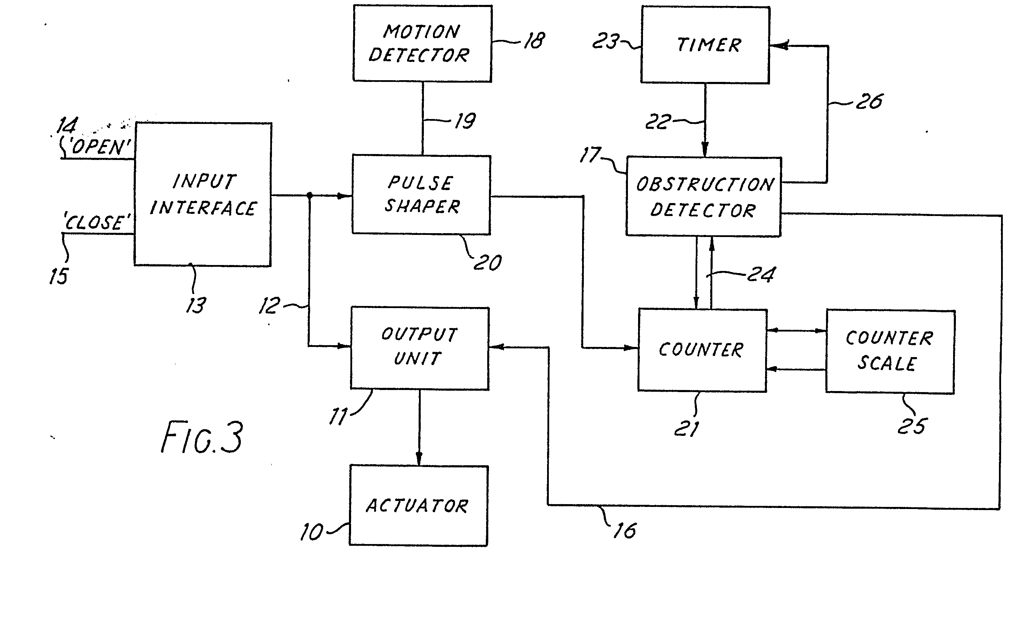

Referring now to the third embodiment, a digital control arrangement is illustrated by the block diagram of Fig 3. A motion sensing means which employs an A.C. generator effectively generates a series of pulses while the door is in motion, and this admits the possibility of employing pulse counting techniques to monitor not only the actual movement of the door but, also, its position. This type of arrangement may also make use of a digital encoder as a motion sensor, for example, in which the motion is transferred to a rotatable sectored disc in the path of an optical coupler.

In Fig 3 the door actuator is represented at 10, and its electro-pneumatic valve is controlled by the output of a unit 11, responsive to control signals carried by a connection 12 from an interface 13 which receives normal OPEN and CLOSE command signals 14 and 15 respectively, and which is also responsive to an output 16 from an obstruction detector 17 to reverse a close signal to re-open the door.

The "digital" motion sensor is indicated by 18 and produces a pulse output connected at 19 through a pulse shaper 20 to a pulse counter 21. The pulse shaper 20 includes gating means responsive to the open and close controls 12 to inhibit the output whilst the door is opening.

Detection of an obstruction is achieved by searching for the cessation of sensor pulses in mid-movement. This is realised by "clocking" a monostable circuit, in the obstruction detector 17, with the output 22 of a timing circuit 23 and "resetting" the monostable by a signal 24 each time counter 21 receives a pulse. As long as the door continues moving, and the motion sensor 18 provides pulses to counter 21, the monostable will be constantly reset by the pulses. However, should the pulses cease, two successive clock pulses 22 will cause the monostable to change the state of its output 16, the effect of which is to reverse the actuator 10 to open the door.

The counter 21 may be interconnected with a counter scale unit 25 in which is stored pulse counts, starting for example at zero for an open door, and corresponding to the position of the door at the obstruction detector arming point and the fully closed position. By incrementing or decrementing the pulse count as appropriate the exact position of the door can be continuously monitored, and the door may be re-opened to the "arming point" or merely a short distance in response to the corresponding count change.

The operation of the obstruction detector 17 may be inhibited to the "arming point" and a corresponding temporary inhibit is provided from the detector 17 to the timer 23 on connection 26 for this purpose.

0158421

CLAIMS

1. A door close mechanism comprising actuator means (10) energisable to provide motive power for opening and closing the door, characterised by motion sensing means (18) responsive to a halt in the closing movement of the door to produce a change in an output (19) which will indicate the presence of an obstruction, and interrupt control means (17) responsive to said change to interrupt energisation of the actuator means (10) to permit clearance of the obstruction.

2. A door close mechanism as claimed in Claim 1 further characterised by means for enabling the output of the motion sensing means (18) when the door reaches a partially closed position.

3. A door close mechanism according to Claim 2 wherein said enabling point corresponds to open doorway width approximately equal to a shoulder width of an adult male passenger.

4. A door close mechanism according to any preceding claim further characterised in that the interrupt control means (17) is operable to repeat at least part of the energisation cycle of the actuator means (10).

5. A door close mechanism as claimed in any preceding claim further characterised in that the door may be re-opened to the enabling point of the motion sensing means (18).

6. A door close mechanism as claimed in any preceding claim further characterised in that the motion sensing means (18) comprises an electric signal generator responsive to movement of the door to generate electrical signals (19).

7. A door close mechanism as claimed in Claims 6
   characterised in that the electric signal
   generator (18) comprises a rotary machine driven
   from a door drive means.

8. A door close mechanism according to Claim 6
   characterised in that said electrical signals (19)
   comprise electrical pulses and means (17, 20, 21,
   23, 25) responsive to said signals (19) operate in
   response to the number of said pulses generated.

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 086 267 (WABCO) <br> * Figure 2; claims * | 1 | E 05 F 15/00 <br> E 05. F 15/06 |
| | --- | | |
| A | EP-A-0 083 947 (HÖRMANN KG) | | |
| | --- | | |
| A | US-A-4 134 050 (D.SIBALIS) | | |
| | --- | | |
| A | CH-A- 360 921 (HANS BAUMGARTNER & CO.) | | |
| | ----- | | |

TECHNICAL FIELDS
SEARCHED (Int. Cl 4)

E 05 F 15/00

The present search report has been drawn up for all claims

| Place of search | Date of completion of the search | Examiner |
|---|---|---|
| THE HAGUE | 07-06-1985 | BEYER F. |